# EUROPÄISCHE PATENTSCHRIFT

(11) **EP 0 407 921 B1**
(45) Veröffentlichungstag und Bekanntmachung des Hinweises auf die Patenterteilung: **02.11.1994**
(21) Anmeldenummer: 90112998.1
(22) Anmeldetag: 07.07.1990
(51) Int. Cl.: C04B 38/02, C04B 28/26

(54) **Anorganischer Schaumstoffkörper und Verfahren zur Herstellung desselben**
Anorganic porous shaped product and process for the production of the same
Produit minéral mis en forme poreuse et procédé pour la préparation de celui-ci

(30) Priorität: 14.07.1989 DE 3923284
(43) Veröffentlichungstag der Anmeldung: 16.01.1991
(73) Patentinhaber: Giesemann, Herbert, D-79801 Hohentengen (DE)
(72) Erfinder: Giesemann, Herbert, D-79801 Hohentengen (DE)
(74) Vertreter: Werner, Hans-Karsten, Dr.Dipl.-Chem.

(56) Entgegenhaltungen:
- EP-A- 0 288 071
- DE-A- 3 010 924
- DE-B- 1 471 005
- DE-B- 1 964 000
- DE-B- 1 965 008

## Beschreibung

Gegenstand der vorliegenden Erfindung sind anorganische Schaumstoffkörper, die zumindest teilweise offenzellig sind und vorzugsweise aus einem abbindefähigen Gemisch und einem Schaumbildner hergestellt worden sind. Sie sind vor allem geeignet als faserfreie, hochfeuerfeste thermische Dämmstoffe, die in bisher nicht bekannter Weise höchste Wärmedämmung und längste Formwiderstandsfähigkeit bei den höchsten Brandtemperaturen in sich vereinigen.

Alle organischen Schaumdämmstoffe haben zwar sehr günstige Dämmwerte, lösen sich aber bei Temperaturbelastungen zwischen 100°C und 200°C abtropfend oder abschmelzend unter Rauchbildung und zum Teil unter Abgabe toxischer Gase auf.

Die DE-B-1154752 beschreibt ein Verfahren zur Herstellung von glasartigen porösen Formkörpern. Dabei werden die glasartigen porösen Formkörper derart hergestellt, daß das fasrige silikatische Material mit Alkalisilikaten im Verhältnis von 0,02 bis 0,7 zu 1 in wässriger Lösung aufgeschlossen und gelöst, getrocknet, zerkleinert und auf Temperaturen zwischen 700 und 900°C erhitzt wird. Vorzugsweise kann der Formkörper mit üblichen Überzugsmitteln in flüssiger Form überzogen werden. Im porösen Körper können weiterhin zur Erhöhung der Stabilität Metallnetze oder Streckblech eingelegt werden.

Die DE-B-1198271 beschreibt ein Verfahren zur Erhöhung der Feuer- und Hitzebeständigkeit von Bauplatten, wobei Suspensionen von wasserhaltigen Alkalisilikatpartikeln mit fein verteilten Stoffen, die die Alkalisilikate bei erhöhten Temperaturen in wasserunlösliche Silikate überführen sollen, vermischt und diese Suspension auf die Oberflächen der Bauplatten aufgebracht wird. Dabei können auf die getrockneten Alkalisilikatschichten Kunststofffolien oder Metallfolien aufkaschiert werden.

Die DE-B-1471005 beschreibt ebenfalls faserhaltige Brandschutzplatten aus Alkalisilikaten, wobei die Platten gegen den Einfluß von Wasser mit Schutzüberzügen versehen sein können.

Die DE-A-1796260 beschreibt eine schäumbare keramische Zusammensetzung aus keramischen Rohstoffen, Wasserglas und auf Stickstoff basierendem organischem blasenbildendem Wirkstoff mit einer Zersetzungstemperatur von 100 bis 250°C. Als Wirkstoff wird unter anderem Azodicarbonamid genannt. Die Raumdichte der geschäumten Keramik weist eine offene oder halb geschlossene Zellenstruktur mit einem spezifischen Gewicht von 0,6 bis 1,0 g/l auf.

Die DE-B-1934855 beschreibt ebenfalls ein Verfahren zur Herstellung eines geschäumten Keramikproduktes auf der Basis von Wasserglas und Treibmitteln, bei der durch ein anorganisches Treibmittel eine Raumdichte von 0,5 g/l erreicht wird.

Anorganische Dämmstoffe hingegen bleiben zwar formbeständig innerhalb der Temperaturbereiche von 250°C bis 1100°C, stellen jedoch einen unbefriedigenden Kompromiss dar zwischen der möglichst hohen Dämmung gegen die Hitze und der unbedingt erforderlichen Formbeständigkeit bei Brandtemperaturen zwischen 750°C und 1200°C. Die Glas- und Mineralfaserdämmstoffe haben zwar niedrige Wärmeleitzahlen, sind jedoch im Brandfall nur belastbar bis 750°C. Ein weiterer Nachteil ist, daß diese schon in diesem Bereich wegen der empfindlichen Faserstruktur einem Löschwasserstrahl mit 2 bar (DIN 4102, Teil 2, 6.2.10) oder einem Stoßdruck von 20 N/m² micht standhalten können (DIN 4102, Teil 2, 6.2.9).

Die faserfreien Gasbeton- und Blähvermiculitedämmplatten haben zwar eine Formbeständigkeit bis 1100°C, weisen aber eine material- und verfahrensbedingte Rohdichte von 600 bis 1000 kg/m³ auf; in diesem Bereich aber ist die Wärmeleitzahl von 0,1 bis 0,3 W/mk noch sehr ungünstig.

Weiterhin sind aus DE-B-19 65 008 keramische Schaumkörper bekannt, für deren Herstellung kolloide Kieselsäure als anorganisches Bindemittel und Azodicarbonsäureamid als Schäumer verwendet werden. Diese Formkörper weisen bei einer Dichte von 500 kg/m³ eine Wärmeleitfähigkeit von 0.091 kcal/mh°C (ca 0.1 W/mK) auf.

Einen Überblick über die derzeit bekannten organischen und anorganischen Schaumstoffdämmkörper gibt nachstehende Tabelle 1:

**Tabelle 1**

| | Rohdichte kg/m³ | Wärmeleitzahl W/mK | Grenztemperaturbelastbarkeit *⁾ |
|---|---|---|---|
| Polystyrolschaum | 15 - 35 | 0,035 | 80°C |
| | (abschmelzen Rauch- und Gasbildungen) | | |
| Polyurethanschaum | 30 - 50 | 0,030 | 130°C |
| | (Rauch-und Gasbildung) | | |
| PVC-Schaum | 30 - 50 | 0,035 - 0,040 | 150°C |
| Amino- und Phenoplastschaum | 15 - 50 | 0,035 - 0,040 | 120 - 140°C |
| Glaswolle | Matten- und Plattenform 30 - 200 | 0,035 - 0,050 | 500°C |
| Mineralwolle | Matten- und Plattenform 30 - 400 | 0,035 - 0,060 | 750°C |
| Glasschaum | 135 | 0,045 | 460°C |
| Gasbeton | 600 - 900 | 0,1 - 0,2 | 1100°C und höher |
| Bläh-Vermiculite | 700 - 900 | 0,1 - 0,3 | 1100°C und höher |
| Bläh-Perlite | 700 - 900 | 0,1 - 03, | 800°C |

| | | | |
|---|---|---|---|
| *⁾ Dauerbelastbarkeit 180 bis 360 min nach DIN 4102. Kurzfristig (d.h. einige Minuten) kann oftmals höher erhitzt werden. | | | |

Aus der obigen Zusammenstellung geht unter anderem hervor, daß Wärmebestandigkeit oberhalb von 800°C bisher nur erzielt werden kann mit Materialien, die ausgesprochen schlechte Wärmeleitzahlen aufweisen.

Bezüglich der Widerstandsfähigkeit bei höheren Temperaturen hat man sich international auf eine Einheits-Temperaturzeitkurve (ETK) entsprechend der DIN-Norm 4102 geeinigt. Diese sieht hinsichtlich der Volumenbeständigkeit von Baustoffen im Brandfall wie folgt aus:

| | | | |
|---|---|---|---|
| nach | 30 min | (t-min) | 822 K |
| | 60 min | | 925 K |
| | 90 min | | 986 K |
| | 120 min | | 1 029 K |
| | 180 min | | 1 090 K |
| | 360 min | | 1 194 K |

Es besteht somit nach wie vor ein echtes Bedürfnis nach einem Werkstoff, der bezüglich der Rohdichte innerhalb des Bereiches von 50 bis 500 kg/m³ liegt und damit eine Wärmeleitzahl im Bereich von 0,035 bis 0,055 W/mK aufweist, aber dennoch bei Temperaturen bis zu 1200°C und höher völlig feuerbeständig und volumenbeständig ist.

Es ist bekannt, daß Luft bzw. Gase die besten Dämmstoffe sind. Ein Teil der Wärmeleitung bei Luft und Gasen erfolgt durch Zirkulation. Erst wenn die Porenräume relativ klein werden und Durchmesser von 2 mm und kleiner aufweisen, wird die Luftzirkulation so gering, daß sie physikalisch vernachlässigt werden kann.

Aufgabe dieser Erfindung war es somit, einen Schaumdämmstoff zu finden und ein Verfahren zu seiner Herstellung zu entwickeln, um die folgende Lücke zu schließen: Eine möglichst niedrige Wärmeleitzahl, um damit die Brandhitze von dem zu schützenden Körper, z.B. tragende Stahlstützen, fernzuhalten, deren kritische Temperatur bei 500°C liegt und dabei eine möglichst hohe mechanische Widerstandsfähigkeit im Temperaturbereich bis 1200°C zu erhalten.

Eine weitere Aufgabe der Erfindung bestand darin, diese mechanische Widerstandsfähigkeit über den Bereich einer günstigen Druckfestigkeit (DIN 4102, Teil 2, 6.2.9 und 6.2.10) dieses Schaumstoffkörpers hinaus auf eine hohe Biegefestigkeit, Oberflächenabriebhärte, Zug- und Scherfestigkeit, Kerbschlagzähigkeit, aber auch höchste Gas-und Dampfdiffusionsdichte, Wasserfestigkeit, UV-Beständigkeit und Widerstandsfähigkeit gegen Schimmelbildung und Bakterien zu erreichen. Insbesondere ging es somit darum, einen anorganischen Schaumstoffkörper zu entwickeln, der zumindest teilweise offenporig ist, leicht herzustellen ist, aber dennoch bei sehr hohen Temperaturen noch formbeständig ist.

Es wurde jetzt gefunden, daß diese Aufgabe überraschend einfach dadurch gelöst werden kann, daß der anorganische Schaumstoffkörper, bestehend aus einem zumindest teilweise offenzelligen, durch Erwärmen geschäumten und gehärteten Gemisch aus Alkaliwasserglas und einem Füllstoff aus der Gruppe Aluminiumoxid, Siliciumdioxid, Tonerdezement, Gesteinsmehl und Graphit oder deren Gemischen, eine Rohdichte von 50 - 500 kg/m³, vorzugsweise 50 - 400 kg/m³ aufweist. Als Schaumbildner kommen insbesondere hochwirksame organische Schaumbildner in Frage, wie Azodicarbonamid. Dieser Schaumbildner ist bisher ausschließlich verwendet worden zum Schäumen von organischen Kunstharzen. Anorganische Schaumstoffkörper, wie Schaumbeton, wurden bisher entweder dadurch hergestellt, daß man aus Zement, Wasser und einem Detergens einen stabilen Schaum herstellte, der hydraulisch abgebunden hat oder indem man dem Gemisch aus Zement und Wasser Aluminiumpulver zugab, welches durch Gasbildung zum Aufschäumen des Betons vor dem Abbinden führte. Beide Verfahren haben aber nur zu Produkten geführt, die noch immer relativ hohe Raumdichten und damit relativ schlechte Wärmeleitzahlen aufwiesen. Bei der Herstellung von Schaumglas wurden überwiegend anorganische Gasbildner oder Wasserdampf zum Aufschäumen verwendet. Diese Verfahren haben sich als technisch relativ aufwendig erwiesen. Die Schaumgläser stellen bezüglich Dämmwert und Brandfestigkeit nur einen kostspieligen Kompromiß dar, so daß sie bei weitem nicht die technische Bedeutung erlangt haben, die man sich von ihnen versprochen hat. Außerdem haben diese Materialien den Nachteil, nur geschlossenporig herstellbar zu sein.

Aufgeschäumtes Wasserglas ist bezüglich der thermischen Eigenschaften noch viel schlechter als Schaumgläser. Hinzu kommt noch die völlig fehlende Wasserbeständigkeit. Es war daher zunächst nicht zu erwarten, daß ein Gemisch aus Wasserglas und den erfindungsgemäßen Füllstoffen beim Aufschäumen zu anorganischen Schaumstoffkörpern führen würde, die hervorragende Eigenschaften aufweisen. Dabei war weiterhin zu beachten, daß die bisher verwendeten anorganischen Schaumbildner bei derartigen Gemischen zu völlig unbefriedigenden Ergebnissen geführt haben. Überraschenderweise sind vor allem organische Schaumbildner, wie Azodicarbonamid, hervorragend geeignet, Gemische aus Wasserglas und den erfindungsgemäß verwendeten Füllstoffen aufzuschäumen und in Schaumkörper der gewünschten Qualität zu überführen.

Erstaunlicherweise ist auch die Wasserbeständigkeit und die Wasserdampfbeständigkeit der erfindungsgemäßen Schaumstoffkörper hervorragend. Dies beruht offensichtlich darauf, daß die erfindungsgemäßen Füllstoffe in der Lage sind, bei den Temperaturen des Aufschäumens mit dem Wasserglas zumindest oberflächlich chemisch zu reagieren und dabei das wasser- und wasserdampfempfindliche Wasserglas in wasserunempfindliche Silicate zu überführen. Diese chemischen Reaktionen finden vor allen Dingen statt mit Aluminiumoxid und Siliciumdioxid sowie Füllstoffen, die hiervon einen ausreichenden Anteil enthalten. Graphit als Fullstoff allein führt zwar zu weniger wasserbeständigen Schaumstoffkörpern, zeigt jedoch im Gemisch mit den anderen Füllstoffen hervorragende Eigenschaften bezüglich Wärmedämmung und Brandschutz. Es erschien zunächst verwunderlich, daß der an sich brennbare Graphit in den erfindungsgemäßen Schaumstoffkörpern dennoch zu guten Werten bezüglich Feuerbeständigkeit führt. Wahrscheinlich ist dies darauf zurückzuführen, daß die Oberfläche des Graphits mit einer glasigen Schicht aus Natriumsilicat überzogen ist, welche die Oxidation durch Sauerstoff inhibiert.

Von entscheidender Bedeutung für die Herstellung der erfindungsgemäßen Schaumstoffkörper ist die Wirkungsweise und Wirksamkeit des Schaumbildners. Alle bisher bekannten anorganischen Schaumbildner, wie Natriumbicarbonat, Ammoniumbicarbonat, Ammoniumcarbonat oder Peroxide, sind nicht in der Lage, Gemische aus Wasserglas und Füllstoffen beim Erwärmen so weit aufzuschäumen, daß Rohdichten unter 500 kg/m³ entstehen. Dementsprechend sind auch die Wärmeleitzahlen derartiger Produkte deutlich schlechter. Es ist somit erstmals durch Verwendung eines organischen Schaumbildners, wie Azodicarbonamid gelungen, Gemische aus Wasserglas und Füllstoffen so aufzuschäumen und zu stabilisieren, daß Produkte mit den gewünschten Eigenschaften entstehen konnten. Dabei ist zu beachten, daß Azodicarbonamid sich ab etwa 170°C ausreichend schnell zersetzt. Erfindungsgemäß kann deshalb bereits bei Temperaturen von oberhalb 180°C gearbeitet werden. Besonders gute Ergebnisse erhält man, wenn man das Gemisch auf Temperaturen zwischen 200 und 300°C erwärmt, wobei gleichmäßig lockere, teilweise offenzellige Produkte entstehen. Je nach Mengenverhältnis Wasserglas : Füllstoff einerseits und dem Zusatz des Treibmittels ist es möglich, Rohdichten zwischen 50 und 500 kg/m³, vorzugsweise 50 bis 400 kg/m³, herzustellen. Selbstverständlich ist es auch möglich, Schaumstoffkörper mit höheren Raumdichten herzustellen, jedoch bedarf es dazu nicht unbedingt des erfindungsgemäßen Verfahrens.

Bekanntlich können anorganische Medien, wie Glas, Porzellan und keramische gebrannte Produkte nicht elastifiziert werden. Naturgemäß müssen Schaumstoffe mit dünnen Wandungen von 0,001 bis 0,0001 mm mechanisch empfindlich sein, weil sie sprödhart sind. Nur Kunststoffzellwandungen sind elastisch. Anorganische Schaumstoffkörper müssen aber auch eine Mindeststabilität bei der Produktion, dem Transport und beim Einbau, besonders im Bauwesen, aufweisen. Deshalb wurden weiterhin Verfahren und Ausführungsformen der Erfindung entwickelt, die auch diese Aufgabe erfüllen. Die erfindungsgemäßen Schaumstoffkörper mit einer Rohdichte von 50 bis 500 kg/m³, vorzugsweise 50 - 400 kg/m³, werden dazu nur in den Randzonen mit einer Mischung aus Alkaliwasserglas und anorganischen Füllstoffen, wie Aluminiumoxid, Quarzmehl usw., imprägniert. Praktisch kann dies erfolgen durch Übersprühen oder kurzes Eintauchen des Körpers bis zu der gewünschten Tiefe und anschließendem Trocknen bei Temperaturen über 100°C. Insbesondere für diese Art der Nachbehandlung ist die offene Zellstruktur notwendig. Erfindungsgemäß bleibt der größte Teil des Schaumstoffkörpers in der gewünschten niedrigen Rohdichte für die günstige Wärmedämmung, die mechanisch beanspruchte Randzone jedoch weist eine größere mechanische Stabilität auf. Bei größeren Dimensionen des Schaumstoffkörpers kann man diese Randzonenverstärkung auch durch zweimaliges Imprägnieren verbessern, indem man zunächst eine Mischung mit geringerer Viskosität und dann beim zweiten Mal eine Mischung mit höherer Viskosität verwendet.

In diesem Stadium des Verfahrens haben die erfindungsgemäßen Schaumstoffkörper schon eine gewisse Mindeststabilität, sind jedoch noch gas- und wasserdampfdurchlässig. Die Werte liegen zwischen 5 und 50 µm. In einigen Fällen der Praxis ist diese Atmungsaktivität nach dem Einbau erwünscht, meist ist diese Wasser- und Wasserdampfaufnahmefähigkeit jedoch ungünstig, weil ein durchnäßter Dämmstoffkörper eine wesentlich erhöhte, ungünstigere Wärmedämmung aufweist. Wasser hat eine Wärmeleitzahl von 0,58 W/m.K., Eis hingegen sogar von 2,2 W/m.K. Weiterhin bewirkt das Gefrieren des Wassers in einem porösen Dämmstoffkörper eine gefährliche Sprengwirkung.

In diesen besonderen Fällen der Praxis muß das Eindringen des Wassers unbedingt vermieden werden. Es läßt sich dazu auf diesen in den Randzonen verstärkten anorganischen Schaumkörper eine kompakte Schicht aufsprühen oder aufrakeln, bestehend beispielsweise aus einem pastösen Gemisch aus Alkaliwasserglas und anorganischem Füllstoff. Anschließend wird getrocknet wie nach den vorhergehenden Imprägnierungen. Die Haltbarkeit dieser äußeren Deckschicht wird aber erst durch das Verfahren der Randzonenverstärkung erreicht, da diese dadurch statisch in der Tiefe des Körpers verankert ist. Andernfalls würde diese Schicht keine feste Bindung haben und sich leicht ablösen. Diese Bindung in die Tiefe erfolgt vorzugsweise mit dem gleichen adhäsiven Bindematerial des Alkaliwasserglases, so daß kein fremdes Adhäsivmedium nötig ist. Will man diese Deckschicht hinsichtlich der Diffusionsdichte noch verstärken, so kann diese z.B. mit einer Aluminiumfolie mit einer Stärke von beispielsweise 0,05 mm überzogen werden, wobei das Alkaliwasserglas wiederum ein günstiges Adhäsivmedium für diese Metallfolie darstellt. Sofern es sinnvoll oder nötig ist, kann diese Aluminiumfolie wiederum mit einer Schicht aus dem oben erwähnten pastösen Gemisch überzogen werden.

Die Aluminiumfolie hat zusätzlich eine erfreulicherweise beachtliche Zugfestigkeit. Da eine Biegefestigkeit in der Praxis, wie oben geschildert, oft dringend notwendig ist und die Bruchgefahr eigentlich beseitigt sein muß, wurden weitere Versionen erprobt, die überraschenderweise ein hervorragendes Ergebnis zeigten.

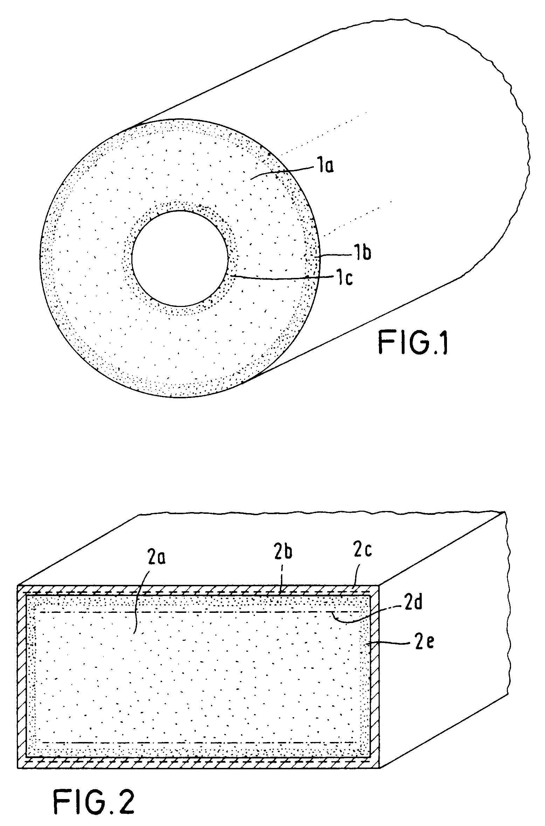

Bereits während des Aufschäumungsprozesses der anorganischen Medien zum Schaumkörper wurden feine Stahldrahtgewebe in den Randzonen eingebaut. Dabei tritt durch die Gewebestruktur keinerlei Behinderung des Aufblähens ein. Die Gewebe befinden sich dadurch in den richtigen Zonen, in denen die Biegefestigkeit in den Verbundkörpern erforderlich ist. Die Figur 1 erläutert dies näher. Man kann bekanntlich dann von einem Verbundkörper zweier verschiedener Medien sprechen, wenn diese erst im Verbund die angestrebte Wirkung erzielen. Das setzt unter anderem voraus, daß bei der statischen Beanspruchung dieser Verbund auch erhalten bleibt. Das ist erfindungsgemäß der Fall, weil die Adhäsivwirkung sehr hoch ist und bei höheren Temperaturen auch erhalten bleibt, da die Ausdehnungskoeffizienten der beiden Medien - anorganische Substanz und Stahl - glücklicherweise nahezu gleich sind.

Daneben kann man aber auch zusätzlich oder auschließlich die Zugarmierung in die kompakte Deckschicht einsetzen mit der gleichen Adhäsivwirkung zwischen den beiden Medien. Da diese Adhäsivwirkung zwischen dem Alkaliwasserglas als hitzefestem Kleber auch mit anderen Medien möglich ist, können auch Glasfasergewebe, Glasrovings, Zelluloseprodukte wie Natronkraftpapier oder mit Wasserglas imprägnierte Pappe, gelochte Metallfolien oder -bleche mit runden oder quadratischen Löchern eingesetzt werden, wobei der Lochanteil zwischen 50 und 80 % Flächenanteil liegt.

In all diesen Fällen entstehen Verbundwerkstoffe mit hoch interessanten Eigenschaften, weil das Innere die sehr gute Wäarmedämmung und sehr hohe thermische Widerstandskraft gegen die sehr hohen Brandtemperaturen aufweist, während die äußeren anorganischen Zonen die erforderlichen hohen mechanischen Druck-, Biege- und Scherfestigkeiten und gegebenenfalls völlig wasser- und gasdampfdiffusionsdichte Schichten aufweisen. Der schlagartig einsetzende hohe Druck eines Wasserstrahls auf diese Schaumkörper, z.B. als Ummantelung von Stahlstützen in Wolkenkratzern, kann die Formbeständigkeit auch bei sehr hohen Brandtemperaturen nicht beeinträchtigen.

Die erfindungsgemäßen Schaumstoffdämmkörper können somit je nach endgültigem Verwendungszweck in vielseitiger Weise als Verbundschaumstoffkörper modifiziert und mit anderen Materialien kombiniert werden. So können die erfindungsgemäßen Körper beliebig gefärbt werden.

Wegen der Adhäsivwirkung der oben beschriebenen Gemische kann auch so vorgegangen werden, daß sowohl Schaumkörper mit dem geringen Raumgewicht von 100 bis 200 kg/m³ hergestellt werden, als auch solche mit Raumgewichten von 300 bis 400 kg/m³ und schließlich massive kompakte Platten mit Zugarmierungen, die dann alle miteinander verklebt werden. Dies ist in Figur 2 dargestellt.

Gerade die Schutzfunktion der Ummantelungen von Stahlträgern und Stahlstützen bei Stahlkonstruktionen, insbesondere bei Wolkenkratzern, ist für die Sicherheit von Menschen und Material im Brandfall von größter Bedeutung. Wegen der häufigen Überbelastung solcher Gebäude mit Starkstromleitungen einerseits und brennbaren Medien in der Ausstattung mit Kunststoffen usw. andererseits, muß aber stets mit Bränden gerechnet werden.

Obwohl das äußerliche Aussehen und die Kratzfestigkeit (die Härte beträgt nach der Mohs'schen Skala 8 - 9) der obersten anorganischen, beliebig gefärbten Deckschicht aus obiger Mischung völlig ausreichend ist, kann diese Schicht auch noch mit Glasuren, Sperrholz- oder Marmorverkleidungen usw. überzogen werden.

Die erfindungsgemäßen Schaumstoffkörper können somit je nach endgültigem Verwendungszweck nicht nur in vielseitiger Weise modifiziert und mit anderen Materialien kombiniert werden, sondern auch gleich beim Aufschäumungsprozeß durch Eintragen der schäumbaren Masse in die gewünschte Form dem späteren Verwendungszweck angepaßt werden. Weiterhin kann der Schaumstoffkörper wegen seiner feinzelligen, gleichmäßigen und spröden Zellstruktur sehr leicht gefräst, gebohrt und geschliffen werden. Die so hergestellten Formgebilde zeichnen sich dabei durch große Präzision, eine hohe innere Stabilität - die dünnen Leimfugen haben eine Festigkeit, die wesentlich höher als die der porösen Körper ist - und eine dementsprechend vielseitige Verwendungsmöglichkeit z.B. im Maschinenbau und Apparatebau aus, wo hohe Ansprüche an die Volumenstabilität in Temperaturbereichen bis zu 1200°C gestellt werden. Zudem können solche komplizierten Formkörper in kleinen und größeren Stückzahlen mit einem verhältnismäßig geringen Aufwand an formgebenden Gebilden bzw. Schalen mit einem niedrigen Zeitaufwand sehr wirtschaftlich hergestellt werden.

Als Alkaliwassergläser kommen die handelsüblichen Produkte in Frage. Vorzugsweise wird Natriumwasserglas eingesetzt von der Qualitat 38 Beaumé. Höher konzentrierte Natriumsilicatlösungen werden insbesondere durch den Füllstoffgehalt zu viskos. Bei einer Verdünnung unter 20 Beaumé muß unnötig viel Wasser verdampft werden, ohne daß es der Stabilität des Produktes nützt.

Der Gehalt an Füllstoffen kann in relativ weiten Grenzen variiert werden. Vorzugsweise werden Mengenverhältnisse von 1:1 bis 1:5 gewählt.

Als Aluminiumoxide können handelsübliche Produkte verwendet werden, die mehr oder weniger rein sind. Es ist sogar möglich, Rotschlamm zu verwenden, der aus Aluminiumoxid besteht, welches mit erheblichen Mengen Eisenhydroxid verunreinigt ist. Es hat sich gezeigt, daß auch Abmischungen zwischen Aluminiumoxid mit Rotschlamm, Quarzmehl und Tonerdezement sehr günstige Eigenschaften aufweisen. Beispielsweise steigt die Druckfestigkeit, wenn man Quarzmehle verschiedener Körnungen mischt.

Als SiO₂ kann feingemahlener Quarzsand verwendet werden sowie mehr oder weniger reine gefällte Kieselsäuren.

Tonerdezement enthält sowohl Aluminiumoxid als auch SiO₂ und kann erfindungsgemäß ohne weiteres verwendet werden. Als Gesteinsmehl kommen insbesondere solche in Frage, die eine ausreichende Menge SiO₂ und/oder Aluminiumoxid enthalten. Als Graphit können die handelsüblichen Qualitäten verwendet werden, wobei hydrophile Qualitäten sich leichter verarbeiten lassen als hydrophobe. Die Schichtstruktur des Graphits macht ihn besonders geeignet für Produkte mit Rohdichten von 70 bis 100 kg/m³ sowie als eine Komponente von Füllstoffmischungen.

Die Menge an organischen Treibmitteln, wie Azodicarbonamid, kann wiederum in relativ weiten Grenzen variiert werden, wobei es vor allem darauf ankommt, in welchem Maße aufgeschäumt werden soll. Mengen zwischen 5 und 15 Gew.-% des Ansatzes haben sich gut bewährt. Sie weisen jedenfalls genügend Treibkraft auf, um die Gemische aus Wasserglas und Füllstoff beim Erhitzen im gewünschten Maße aufzuschäumen. Das Aufschäumen erfolgt durch Erwärmen auf Temperaturen, bei denen einerseits das Azodicarbonamid bereits ausreichend rasch zerfällt und andererseits das Gemisch aus Wasserglas und Füllstoff sich noch verformen läßt. Vorzugsweise geschieht dies bei Temperaturen zwischen 200 und 300°C.

In einer bevorzugten Ausführungsform werden richtig dimensionierte Luftvolumina z.B. in der Form von Luftkanälen in den anorganischen Schaumstoffkörper eingebaut.

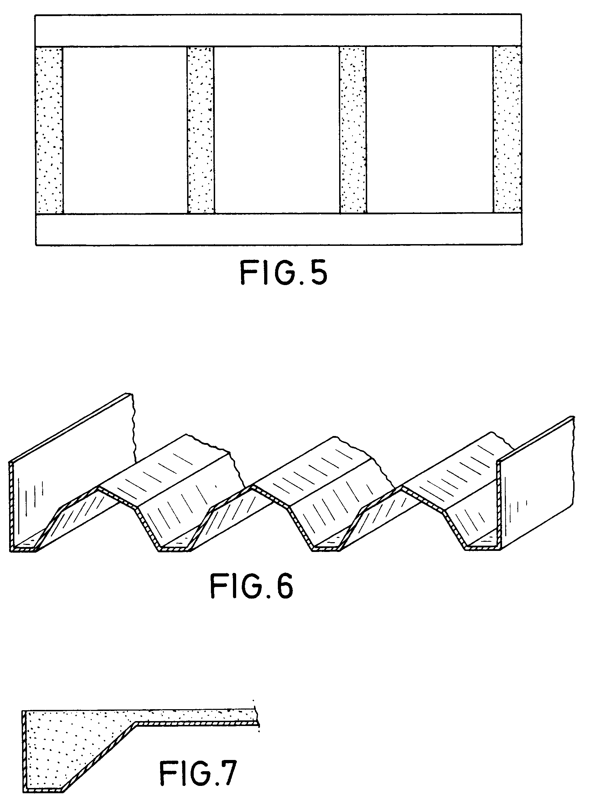

Das Ergebnis des Einbaues von Luftkanälen in dem erfindungsgemäßen Schaumstoffkörper ist in Fig. 4 dargestellt. Wichtig ist hierbei, daß die notwendige Eigenstabilität und Biegefestigkeit des Körpers durch die Kanäle nicht reduziert wird. Im Gegenteil, durch die Verminderung des Eigengewichtes um mehr als 50 % wird die Biegefestigkeit sogar erheblich erhöht und der Körper besitzt günstigere Eigenschaften beim Transport und bei der Handhabung.

In Fig. 5 ist schematisch der Prüfvorgang nach dem sog. Plattentestverfahren entsprechend der DIN-Norm dargestellt und es zeigt sich als Ergebnis, daß die Stege des Schaumkörpers einen Volumenanteil von z.B. 15 - 20 % aufweisen und hier die Wärmeleitzahl 0,043 W/mK beträgt, während die Leitzahl bei den Luftvolumina von 80 bis 85 % bei nur 0,023 W/mk liegt. Dadurch wird die endgültige Wärmeleitzahl dieses anorganischen Dämmstoffes auf 0,028 bis 0,030 W/mK erheblich reduziert.

Ein solcher Dämmwert wird vergleichsweise mit den auf dem Dämmstoffmarkt befindlichen Polystyrolschaumstoffplatten in Partikelform oder in Extruderform erzielt, die als hervorragendes Material hinsichtlich des Dämmwertes - nicht jedoch hinsichtlich des Verhaltens bei Temperaturen über 100°C gelten.

Es muß darauf hingewiesen werden, daß die anorganische flüssige Masse nach den jeweiligen Rezepturen mit dem eingebauten Treibmittel Azodicarbonamid bei Temperaturerhöhung über Raumtemperatur das Bestreben hat, durch die Entwicklung des Ammoniakgases sich kugelförmig aufzublähen. Die Dämmstoffpraxis jedoch verwendet im Hochbau zur Dämmung von Wänden plattenförmige Dämmstoffe, nicht kugelförmige. Stellt man eine Form bei einer Chargenproduktion hochkantig in den Wärmeofen und trägt auf dem Grund die aufzuschäumende flüssige Masse ein, zeigt es sich, daß das kugelförmige Ausbreiten des Ammoniakgases durch die seitlichen hohen Wandungen fast vollständig verhindert wird. Im Ergebnis zeigte sich eine viel zu wenig aufgeschäumte Masse mit einem viel zu hohen Raumgewicht. Wurde hingegen die Plattenform auf ihre Breitseite von z.B. 500 mm gelegt, so entwickelte sich zwar der Schaumstoffkörper durch das Treibmittel auf das niedrige Raumgewicht von z.B. 100 bis 300 kg/m³, jedoch durch das kugelförmige Aufblähen war er unten planeben, auf der Oberseite jedoch stets gewölbt. Der obere Teil des Produktes mußte deshalb durch einen Sägeschnitt abgetrennt werden, um die Plattenform zu erzielen. Das ist natürlich ein Verlust, wenn auch dieser Abfall im Recyclingverfahren wieder eingesetzt werden kann.

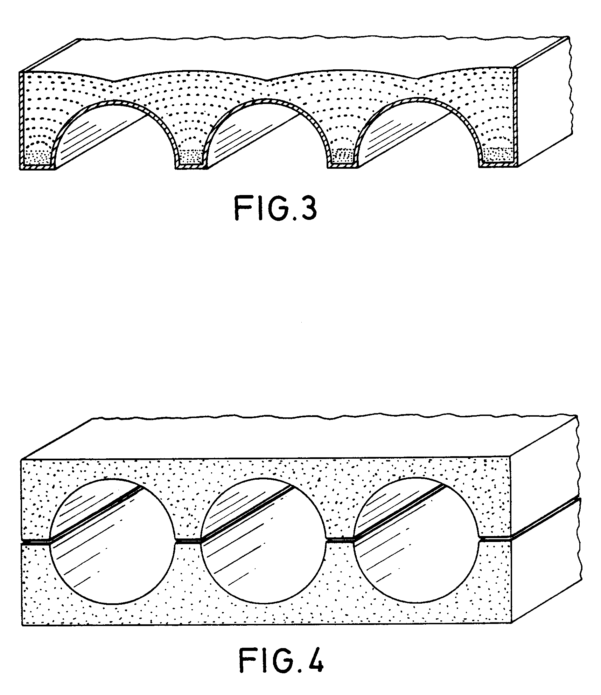

Die in Fig. 3 und auch in Fig. 6 als Abwandlung dargestellte Form wirkt als Unterlage für die Treibmasse dieser Ausbreitung dem kugelförmigen Aufschäumen entscheidend entgegen, wie durch die Strichpunkte dargestellt. Das kugelförmige Aufblähen wird sozusagen in kleinere Raumformen zerlegt, die an der Oberlfäche nur sehr kleine Wölbungen aufweisen, die durch einen Sägeschnitt leicht egalisiert werden können.

Mit dieser Variation der anorganischen Schaumstoffplatte werden somit mehrere Vorteile ingesamt erzielt:
- erheblich niedrigere Wärmeleitzahl
- geringerer Verbrauch von Materie,
- geringeres Transportgewicht,
- günstigere Formgebung für das Austrocknen der letzten Wasseranteile nach dem Aufschäumen,
- höhere Biegesteifigkeit,
- leichtere Verfahrenstechnik des Aufblähens und dadurch geringere Materialverluste bei der Formgebung als Platte.

Eine Dämmstoffplatte nach Fig. 3 würde sich in der Praxis dafür eignen, Starkstromkabel abzudecken und diese vor Kabelbränden und anderen Bränden zu schützen.

Da die Rezeptur Natriumsilikat flüssig und anorganische Pulvermehle selbst ein Adhäsivmedium darstellt, ist das Zusammenfügen wie in Fig. 4 dargestellt besonders leicht. Dabei zeigt sich, daß die dünne kompakte Fuge bei Zugbeanspruchung haltbarer ist als der Schaumstoff.

In Fig. 7 ist weiter dargestellt, daß bei der Produktion diese Luftkanäle an den beiden Enden wie dargestellt zweckmäßig abgeschlossen sind, damit nicht Fremdluft in die Luftkanäle bei der Platte nach Fig. 4 eindringen kann und die Wärmeleitzahl dadurch mindert.

Weiterhin wird nachstehend noch eine andere Methode beschrieben, um den Luftanteil in der fertigen anorganischen Dämmplatte zu erhöhen und damit die Dämmwirkung zu verbessern. Dies geschieht durch die Verwendung von Kunstharzschaumkörpern als Füllstoff.

Ebenfalls besonders bevorzugt ist es, in den Schaumstoffkörper kurze Glas- und Faserstücke mit einer Länge von vorzugsweise 5 - 50 mm einzuarbeiten.

Kunstharzschaumkörper werden bekanntlich in großen Mengen als Verpackungsmaterial eingesetzt, so z.B. die Polystyrolpartikelschaumteile als geschlossene Körper oder auch in Chipsformen. Mit dem Ziel der Minderung der Umweltbelastung - die Materie verrottet bekanntlich kaum in Deponien - und des Recyclings von Materie generell können alle diese Schaumstoffpartikel nach einem Zerschrotungsvorgang in geeigneten Maschinen in die erfindungsgemäßen Körper eingearbeitet werden.

Folgende Verfahrensschritte sind bei der Verwendung dieser Abfallprodukte aus Kunstharzschaumstoff als Füllstoffe sinnvoll einzusetzen.

Nach dem Zerkleinern dieser Formteile mit dem niedrigen Raumgewicht von 15 bis 40 kg/m³ in eine Flocken- oder Kugelform mit einem Durchmesser von 1 bis 10 mm und höher werden diese Formteile mit einem Wasserglasnebel gleichmäßig allseitig übersprüht und im Ofen getrocknet. Durch den entstehenden sehr dünnen Oberflächenfilm wird erreicht, daß Wasseranteile der Treibmasse nach dem Zusammenmischen in den Körper eindringen können und zudem im Treibprozeß durch die Adhäsivwirkung dieses Films eine noch bessere Bindung an die Treibmasse erzielt wird, was zur Stärkung der inneren Festigkeit erheblich beiträgt.

Bei der Zugabe dieser Abfallpartikel ist auf ein gutes Durchmischen dieser Anteile zu achten, so daß die Partikel gleichmäßig verteilt sind. Der Anteil dieser Abfallpartikel am Gesamtvolumen kann bis zu 50 % und auch mehr betragen. Der Prozentsatz hängt im wesentlichen von der Gleichmäßigkeit der Abfallpartikel, ihrer Formgebung, die vorzugsweise rund sein soll, und ihrer Rohdichte ab.

Beträgt dieser Anteil z.B. 50 %, so ist wie bei dem Einbau der Luftkanäle mit einer erheblichen Senkung der Rohdichte zu rechnen. So fällt bei einer Zugabe von von 50 Vol.-% Abfallpartikeln mit 20 kg/m³ Rohdichte diese von 200 kg/m³ auf 110 kg/m³. Diese Rohdichte kann sinngemäß noch vermindert werden, bei einem Anteil von 50 bis 70 %, so daß eine Wärmeleitzahl von 0,032 erzielt werden kann.

In der Praxis fallen im Hochbau bei Dämmarbeiten auch Reste von Glas- und Steinfasermatten an. Damit diese nicht deponiert werden müssen, werden diese Fasern in kürzere Längen von 10 bis 50 mm z.B. geschnitten und in gleicher Weise wie die Abfallschaumstoffpartikel in die Treibmasse gut untergemischt. Durch diese Anreicherung von gleichmäßig verteilten anorganischen Fasern hat sich gezeigt, daß die innere Festigkeit der fertigen anorganischen Schaumkörper erheblich zunimmt und jegliche Rißbildung nach dem Trocknen völlig vermieden wird. Die Adhäsion dieser Glas- und Steinfasern an dem Wasserglas ist besonders günstig als Zugarmierung im Gefüge insgesamt.

Wird nun der derart hergestellte anorganische Dämmstoffkörper einem Brandtest unterzogen mit Temperaturen bis zu 1200°C, so hat sich überraschenderweise gezeigt, daß nach dem Einbau dieser Kunstschaumpartikel keine Beeinträchtigung hinsichtlich der Volumenstabilität des Schaumkörpers bei diesen hohen Temperaturen auftritt. Wird der anorganische Schaumstoffkörper wie erfindungsgemäß dargestellt mit einer kompakten 0,5 bis 20 mm starken anorganischen Schicht überzogen, die gasdiffusionsdicht ist, kann bei den Temperaturen zwischen 100°C und 1200°C kein Sauerstoff an die Kunststoffpartikel herantreten. Diese Partikel verschwinden bei Temperaturen über 100°C und hinterlassen entsprechend ihem Volumen Luftzellen. Da bei hohen Temperaturen über 500°C die anorganische Schaummasse ohnehin eher härter wird, können keinerlei Minderungen bei solchen Brandtemperaturen bei dem anorganischen Schaumstoffkörper eintreten.

Erläuterungen zu den Figuren 1 bis 7:
- Fig. 1a: Schaumstoffkörper mit einer Rohdichte im Innern von ca. 120 kg/m³,
- Fig. 1b: Randzone verstärkt durch Imprägnierung, Rohdichte ca. 300 kg/m³,
- Fig. 1c: kompakte, kratzfeste und diffusionsdichte Deckschicht,
- Fig. 2a: Schaumstoffkörper, Rohdichte im Innern ca. 120 kg/m³,
- Fig. 2b: zugfeste Armierung als Einlage,
- Fig. 2c: kompakte, kratzfeste und diffusionsdichte Deckenschicht,
- Fig. 2d: zugfestes Stahldrahtgewebe als Einlage und
- Fig. 2e: Randzone verstärkt durch Imprägnierung, Rohdichte ca. 300 kg/m³.
- Fig. 3, 4 und 6: zeigen die erfindungsgemäßen Schaumstoffkörper mit Luftkanälen in verschiedenen Ausführungsformen (zylindrische, halbzylindrische und eckige Luftkanäle)
- Fig. 5: stellt schematisch den Prüfvorgang nach DIN für das Plattentestverfahren dar
- Fig. 7: zeigt, daß die Luftkanäle an den Enden gegenüber der Umgebung abgeschlossen sind, damit Fremdluft nicht eindringen kann.

Typische Ausführungsformen des erfindungsgemäßen Verfahrens und der dabei erhaltenen Produkte sind in den nachfolgenden Beispielen zusammengestellt:

### BEISPIEL 1

Es wird ein Gemisch aus
1000 g Natrium- oder Kaliumwasserglas, 38 Beaumé,
700 g Quarzmehl feiner Körnung, und
77 g Azodicarbonamid
gut miteinander vermischt. Die viskose Masse wird in einem Ofen von + 220°C eingegeben. Nach etwa 20 Minuten hat sich die Masse auf etwa das 10-fache Volumen aufgebläht. Die Oberfläche weist eine geschlossene Gußhaut auf. Aus dieser Masse lassen sich nach dem Abkühlen leicht geometrische Formkörper aussägen. Sie weisen noch einen Wassergehalt im Natriumsilicat von 20 bis 25 Gew.-% auf. Dieses Wasser kann durch eine Nachtrocknung mit Temperaturen auch unterhalb von 100°C entfernt werden. Das spezifische Gewicht des getrockneten Produktes beträgt 190 kg/m³. Seine Wärmeleitzahl liegt bei 0,054 W/mK. Bei einer Temperaturbelastung bis 1200°C erfolgt keine Verformung. Im Gegenteil, die mechanische Festigkeit wird durch derartiges Erhitzen noch gesteigert. Beim Erhitzen auf diese Temperaturen erfolgt auch keine Qualmbildung.

### BEISPIEL 2

1000 g Natriumsilicat, 38 Beaumé
700 g Tonerdezement
100 g Azodicarbonamid
werden innig gemischt und die Masse auf ein Blech aufgetragen, welches eine Teflonoberfläche aufweist. Das Blech wird in einen Ofen von 220°C eingegeben. Nach 20 Minuten ist die Masse aufgebläht und die Gußhaut verhältnismäßig dicht. Nach dem Abkühlen werden Formkörper ausgesägt und gewogen. Das spezifische Gewicht beträgt 160 kg/m³. Nach einem Trocknungsvorgang unterhalb von 100°C sinkt das spezifische Gewicht auf 125 kg/m³. Die Wärmeleitzahl beträgt 0,046 W/mK. Die Wärmebelastbarkeit ist die gleiche wie bei dem Material gemäß Beispiel 1.

### BEISPIEL 3

1000 g Natriumsilicat, 38 Beaumé, werden mit
700 g Graphit und
120 g Azodicarbonamid
innig gemischt und in einem Ofen von 220°C eingestellt. Nach 20 Minuten ist die Masse aufgebläht. Die ausgesägten Formkörper haben eine spezifische Dichte von 120 kg/m³. Nach dem Trocknen beträgt die Dichte nur noch 95 kg/m³. Die Wärmeleitzahl beträgt 0,039 W/mK. Die Temperaturbelastbarkeit
ist die gleiche wie im Beispiel 1.

### BEISPIEL 4

1000 g Natriumsilicatlösung, 38 Beaumé
850 g Aluminiumoxid
100 g Azodicarbonamid
werden gemischt und, wie oben beschrieben, bei 220°C behandelt. Die herausgesägten Formkörper weisen eine Dichte von 200 kg/m³ auf und sind porzellanartig weiß. Nach der Trocknung ist die Dichte 155 kg/m³. Die Wärmeleitzahl liegt bei 0,049 W/mK und die Druckfestigkeit ist sehr hoch.

Das Beispiel wurde wiederholt, wobei anstatt des Aluminiumoxids Rotschlamm verwendet wurde. Auch hierbei entstand ein ähnliches Produkt mit ziegelroter Farbe.

### BEISPIEL 5

Der Schaumstoffkörper gemäß Beispiel 1 wurde eingetaucht in eine Lösung aus
1000 g Natriumsilicat, 38 Beaumé, und
250 kg Aluminiumoxid.

Diese Lösung dringt beim Eintauchen nur 3 bis 6 mm in die Randzonen ein. Der Körper wurde bei 90°C getrocknet. Danach wurde er in eine konzentriertere Lösung von
1000 g Natriumsilicat, 38 Beaumé, und
500 g Aluminiumoxid
getaucht und wiederum nur 2 mm eingetaucht und wieder getrocknet. Nach dem Erhitzen auf 200°C erhielt man ein Produkt mit wesentlich höherer mechanischer Festigkeit in den Außenschichten. Durch Erhitzen auf 800°C ist die Festigkeit noch mehr angestiegen.

Ein Teil dieser Muster wurde mit einer Suspension von
1000 g Natriumwasserglas und
900 g Aluminiumoxid
1 mm stark beschichtet und erneut getrocknet und bei 800°C gebrannt. Es entstand ein Produkt mit einer geschlossenen Haut, die eine Härte auf der Mohs'schen Skala von 8 bis 9 aufwies.

## Patentansprüche

1. Anorganischer Schaumstoffkörper bestehend aus einem zumindest teilweise offenzelligen, durch Erwärmen geschäumten und gehärteten Gemisch aus Alkaliwasserglas und einem Füllstoff aus der Gruppe Aluminiumoxid, Siliciumdioxid, Tonerdezement, Gesteinsmehl und Graphit oder Gemischen derselben, dadurch gekennzeichnet, daß er eine Rohdichte innerhalb des Bereiches 50 - 500 kg/m³ aufweist.

2. Schaumstoffkörper gemäß Anspruch 1, dadurch gekennzeichnet, daß die Rohdichte 50 - 400 kg/m³ beträgt.

3. Schaumstoffkörper gemäß Anspruch 1 oder 2, dadurch gekennzeichnet, daß die äußeren Schichten mit einem ungeschäumten Gemisch aus Alkaliwasserglas und Füllstoff imprägniert und bei erhöhten Temperaturen getrocknet sind.

4. Schaumstoffkörper gemäß Anspruch 1 bis 3, dadurch gekennzeichnet, daß mindestens eine der Oberflächen mit einer geschlossenen kompakten Schicht versehen ist.

5. Schaumstoffkörper gemäß einem der Ansprüche 1 bis 4, dadurch gekennzeichnet, daß mindestens eine der Oberflächen mit einer zugfesten Verstärkungsschicht verbunden ist.

6. Schaumstoffkörper nach einem der Ansprüche 1 bis 5, dadurch gekennzeichnet, daß Luftkanäle in dem anorganischen Schaumstoffkörper vorhanden sind.

7. Schaumstoffkörper nach Ansprüchen 1 bis 6, dadurch gekennzeichnet, daß als Füllstoff zerkleinerter Kunstharzschaumstoff in Flocken- oder Kugelform, der zuvor mit einem Wasserglasnebel allseitig übersprüht und im Ofen getrocknet wurde, als Füllstoff verwendet wird.

8. Schaumstoffkörper nach Ansprüchen 1 bis 7, dadurch gekennzeichnet, daß er zusätzlich Glas- und Steinfaserstücke als Füllstoff enthält.

9. Verfahren zur Herstellung eines zumindest teilweise offenzelligen anorganischen Schaumstoffkörpers aus einem abbindefähigen Gemisch und einem Schaumbildner, wobei ein Gemisch aus aus Alkaliwasserglas, mindestens einem Füllstoff aus der Gruppe Aluminiumoxid, Siliciumdioxid, Tonerdezement, Gesteinsmehl und Graphit mit einem Treibmittel, vorzugsweise Azodicarbonamid auf Temperaturen von mindestens 180°C, vorzugsweise 200 bis 300°C, erhitzt wird, dadurch gekennzeichnet, daß die Menge an Schaumbildner ausreicht, eine Rohdichte innerhalb des Bereiches 50 - 500 kg/m³ zu erzeugen.

10. Verfahren gemäß Anspruch 9, dadurch gekennzeichnet, daß eine Rohdichte innerhalb eines Bereiches von 50 - 400 kg/m³ erzeugt wird.

11. Verfahren gemäß Anspruch 9 oder 10, dadurch gekennzeichnet, daß mindestens eine der Oberflächen des Schaumstoffkörpers anschließend mit einem Gemisch aus Alkaliwasserglas und Füllstoff, jedoch ohne Treibmittel, getränkt und erneut erhitzt wird.

12. Verfahren gemäß Anspruch 9 bis 11, dadurch gekennzeichnet, daß mindestens eine der Oberflächen mit einer geschlossenen kompakten Schicht versehen wird.

13. Verfahren gemäß einem der Ansprüche 9 bis 12, dadurch gekennzeichnet, daß mindestens eine der Oberflächen mit einer zugfesten Verstärkungsschicht verbunden wird.

14. Verfahren gemäß Ansprüchen 9 bis 13, dadurch gekennzeichnet, daß in den anorganischen Schaumstoffkörpern Luftkanäle eingebaut werden.

15. Verfahren gemäß Ansprüchen 9 bis 14, dadurch gekennzeichnet, daß als Füllstoff zerkleinerter Kunstharzschaumstoff in Flocken- oder Kugelform, der zuvor mit einem Wasserglasnebel allseitig übersprüht und im Ofen getrocknet wurde, als Füllstoff verwendet wird.

16. Verfahren gemäß Ansprüchen 9 bis 15, dadurch gekennzeichnet, daß als Füllstoff Glas- und Steinfaserstücke eingearbeitet werden.

## Claims

1. An inorganic foam body, consisting of an at least partially open-cell foam formed by thermally foaming and hardening a mixture comprising an alkali water glass and a filler from the group of aluminium oxide, silicon dioxide, aluminous cement, crushed rocks, graphite or mixtures thereof, characterized in that it has a bulk density within the range of from 50 to 500 kg/m³.

2. The foam body according to claim 1, characterized in that the bulk density is from 50 to 400 kg/m³

3. The foam body according to claims 1 or 2, characterized in that the outer layers have been impregnated with an unfoamed mixture comprising an alkali water glass and filler and have been dried at an elevated temperature.

4. The foam body according to claims 1 to 3, characterized in that at least one of the surfaces has been provided with a continuous compact layer.

5. The foam body according to any of claims 1 to 4, characterized in that at least one of the surfaces has been bonded to a reinforcing layer having a high tensile strength.

6. The foam body according to any of claims 1 to 5, characterized in that air channels are present in the foam body.

7. The foam body according to claims 1 to 6, characterized in that as a filler there is used a size-reduced synthetic resin foam in floccular or spherical form which in advance has been sprayed from all sides with a water glass mist and dried in an oven.

8. The foam body according to claims 1 to 7, characterized in that it further contains glass and stone fiber pieces as a filler.

9. A process for producing an inorganic foam body, consisting of an at least partially open-cell foam from a mixture capable of setting and a foaming agent, wherein a mixture comprising an alkali water glass and a filler from the group of aluminium oxide, silicon dioxide, aluminous cement, crushed rocks, graphite is heated with a blowing agent, and preferably azodicarbonamide, at temperatures of at least 180 °C, and preferably of from 200 °C to 300 °C, characterized in that the amount of the foaming agent is sufficient to provide a bulk density within the range of from 50 to 500 kg/m³.

10. The process according to claim 9, characterized in that a bulk density with a range of from 50 to 400 kg/m³ is produced.

11. The process according to claims 9 and 10, characterized in that at least one of the surfaces of the foam body is subsequently impregnated with a mixture comprising alkali water glass and filler but no blowing agent, and is once more heated.

12. The process according to claims 9 to 11, characterized in that at least one of the surfaces is provided with a continuous compact layer.

13. The process according to any of claims 9 to 12, characterized in that at least one of the surfaces is bonded to a reinforcing layer having a high tensile strength.

14. The process according to claims 9 to 13, characterized in that in the process air channels are incorporated in the inorganic foam bodies.

15. The process according to claims 9 to 14, characterized in that as a filler there is used a size-reduced synthetic resin foam in floccular or spherical form which in advance has been sprayed from all sides with a water glass mist and dried in an oven.

16. The process according to claims 9 to 15, characterized in that glass and stone fiber pieces are incorporated as a filler.

## Revendications

1. Pièces à structure de mousse, en matière inorganique, constituées d'un mélange au moins partiellement à alvéoles ouvertes, transformé en mousse et durci de verre soluble alcalin, et d'une charge de remplissage choisie dans le groupe consistant en oxyde d'aluminium, dioxyde de silicium, ciment alumineux, poudre de roche et graphite ou les mélanges de ces substances, caractérisées en ce que il présente une masse volumique apparente située dans la plage de 50 à 500 kg/m³.

2. Pièces selon la revendication 1, caractérisées en ce que la masse volumique apparente est de l'ordre de 50 à 400 kg/m³.

3. Pièces selon la revendication 1 ou 2, caractérisées en ce que les couches externes sont imprégnées d'un mélange non transformé en mousse de verre soluble alcalin et d'une charge de remplissage et sont séchées à des températures élevées.

4. Pièces selon les revendications 1 à 3, caractérisées en ce que au moins une des couches superficielles est pourvue d'une couche compacte fermée.

5. Pièces selon l'une des revendications 1 à 4, caractérisées en ce que au moins une des couches superficielles est liée avec une couche de renforcement résistante.

6. Pièces selon l'une des revendications 1 à 5, caractérisées en ce que des canaux d'air sont présents dans lesdites pièces.

7. Pièces selon les revendications 1 à 6, caractérisées en ce que de la mousse plastique fractionnée en flocons ou en billes, qui a été auparavant aspergée de tous côtés d'un brouillard de verre soluble et séchée au four, est utilisée comme charge de remplissage.

8. Pièces selon les revendications 1 à 7, caractérisées en ce qu'elles contiennent en outre des morceaux de verre et de fibres minérales comme matière de remplissage.

9. Procédé pour la fabrication d'une pièce à structure de mousse en matière inorganique, au moins partiellement à alvéoles ouvertes à partir d'un mélange pouvant durcir et d'un agent moussant, dans lequel un mélange de verre soluble alcalin, et d'au moins une charge de remplissage choisie dans le groupe consistant en oxyde d'aluminium, dioxyde de silicium, ciment alumineux, poudre de roche et graphite avec un agent moussant, de préférence de l'azodicarbonamide, est chauffé à des températures d'au moins 180°C, de préférence de 200 à 300°C, caractérisé en ce que la quantité d'agent moussant est suffisante pour produire une masse volumique apparente située dans la plage de 50 à 500 kg/m³.

10. Procédé selon la revendication 9, caractérisé en ce qu'est produite une masse volumique apparente située dans la plage de 50 à 400 kg/m3.

11. Procédé selon la revendication 9 ou 10 caractérisé en ce que au moins une des couches superficielles de la pièce est ensuite imprégnée avec un mélange de verre soluble alcalin et d'une charge de remplissage et est à nouveau chauffée.

12. Procédé selon les revendications 9 à 11, caractérisé en ce que au moins une des surfaces est pourvue d'une couche compacte fermée.

13. Procédé selon une des revendications 9 à 12, caractérisé en ce que au moins une des surfaces est liée avec une couche de renforcement résistante.

14. Procédé selon les revendications 9 à 13, caractérisé en ce que des canaux d'air sont incorporés dans les pièces.

15. Procédé selon les revendications 9 à 14, caractérisé en ce que de la mousse plastique fractionnée en flocons ou en billes, qui a été auparavant aspergée de tout côté d'un brouillard de silicate de sodium et séchée au four, est utilisée comme charge de remplissage.

16. Procédé selon les revendications 9 à 15, caractérisé en ce que des fibres de verre et des fibres minérales sont intégrées comme charge de remplissage.
